# EUROPÄISCHE PATENTSCHRIFT

(11) **EP 2 662 579 B1**
(45) Veröffentlichungstag und Bekanntmachung des Hinweises auf die Patenterteilung: **17.07.2019**
(21) Anmeldenummer: 13002451.6
(22) Anmeldetag: 08.05.2013
(51) Int. Cl.: F16C 1/22, F16C 1/26

(54) **Einstellvorrichtung zur Längenanpassung zwischen Seele und Mantel eines Bowdenzuges**
Adjusting device for length adjustment between the core and casing of a bowden cable
Dispositif de réglage pour l'adaptation de la longueur entre une âme et une enveloppe d'un câble Bowden

(30) Priorität: 10.05.2012 DE 102012009187
(43) Veröffentlichungstag der Anmeldung: 13.11.2013
(73) Patentinhaber: SCS Deutschland GmbH & Co. KG, 57319 Bad Berleburg (DE)
(72) Erfinder: Hillwig, Frank, 57319 Bad Berleburg (DE); Hof, Holger, 57319 Bad Berleburg (DE)
(74) Vertreter: Grosse, Wolf-Dietrich Rüdiger

(56) Entgegenhaltungen:
- EP-A1- 0 454 306
- DE-A1- 10 010 869
- JP-U- S5 985 412
- US-A- 4 294 133

## Beschreibung

Die Erfindung betrifft eine Einstellvorrichtung zur Längenanpassung der Funktions- oder auch freie Seillänge genannten Längendifferenz zwischen Seele und Mantel eines Bowdenzuges mit zwei axial zueinander verschiebbaren, über eine Druckfeder gegeneinander vorgespannten, miteinander über Verriegelungsmittel verrastbaren, die Seele gemeinsam aufnehmenden, zumindest mit einem Ende des Mantels zusammenwirkenden Verstellgliedern.

Bei Bowdenzügen ist die Seele in dem Mantel oder Führungsrohr bewegbar gelagert. Dabei kann zwischen Seele und Mantel bzw. zwischen Seelen- und Mantelende einseitig eine Kraft aufgebracht werden, die am anderen Ende des Bowdenzuges abgegriffen werden kann, so dass der Bowdenzug zur Übertragung von Kräften zwischen räumlich getrennten, nicht zwingend linear fluchtenden An- und Abtriebs- Elementen dienen kann.

Derartige Bowdenzüge werden beispielsweise in Kraftfahrzeugen zwischen Betätigungsvorrichtungen wie Hebeln an Rückenlehnen von Vordersitzen und einem zu betätigenden Gerät, wie einer Rastvorrichtung, angeordnet. Durch Betätigung des Hebels kann die Rastvorrichtung entrasten und die Rückenlehne z. B. verschwenkt werden. Dabei müssen die Länge der Seele des Bowdenzuges und die Länge des Mantels zwischen dem Hebel und dem Rastelement exakt aufeinander eingestellt sein, damit auch tatsächlich die Bewegung des Hebels zu einem Entrasten der Rastvorrichtung führt. Bei einer falschen Einstellung oder großen Toleranzen zwischen den Befestigungspunkten von Seelen- und Mantelende könnte z. B. der Hebel schon einen großen Weg zurücklegen, ohne dass sich die Entrastvorrichtung bewegt.

Eine entsprechende Justierung z. B. beim Bowdenzug von Fahrradbremsen erfolgt über Einstell-Schrauben. Durch die DE 101 46 930 A1 ist jedoch auch schon ein Einstellmechanismus zur Längeneinstellung bekannt geworden, bei dem über eine Feder eine Vorspannung zwischen Seele und Mantel erreicht wird. Nach Montage des Bowdenzugs z. B. am Hebel einerseits und der Entriegelungsvorrichtung andererseits ist die Seele gegenüber dem Mantel durch den Einstellmechanismus bereits vorgespannt. Wird der Einstellmechanismus durch Verriegelungsmittel arretiert, so ist automatisch eine optimale Längeneinstellung zwischen Seele und Mantel gegeben.

Nachteilig bei dem Einstellmechanismus zur Längeneinstellung nach der DE 101 46 930 A1 ist jedoch, dass verhältnismäßig aufwendige Werkzeuge zur Erstellung des zylinderförmigen Gehäuses mit innen liegenden Hinterschneidungen und den am Gehäuse angeordneten Betätigungsmitteln benötigt werden. Hinzu kommt, dass die Verriegelungsmittel unabhängig voneinander einrasten können, und nicht zwingend alle einrasten. Ein weiterer Nachteil ist darin zu sehen, dass die Kräfte über verhältnismäßig wenig belastbare, flexible Verbindungen zwischen Betätigungsmittel und Gehäuse übertragen werden müssen.

Die JP S59 85 412 U zeigt eine Einstellvorrichtung eines Bowdenzuges mit zwei axial zueinander verschiebbaren Verstellgliedern, an denen zur Anpassung der Länge jeweils zwei Verzahnungen vorgesehen sind. Eine Verzahnung ist jeweils an einem schwenkbaren Bauteil angeordnet und kann mit einer Verzahnung des anderen Verstellglieds in Eingriff gebracht werden. Zur Verriegelung weist jedes schwenkbare Bauteil eine Nase auf, die mit einer in Verschieberichtung ausgerichteten Nut in Eingriff gebracht werden kann.

Die DE 100 10 869 A1 zeigt eine Einstellvorrichtung eines Bowdenzuges, mit zwei axial zueinander verschiebbaren Verstellgliedern, an denen zur Anpassung der Länge jeweils eine Verzahnung vorgesehen ist. Zur Festlegung der eingestellten Länge werden die Verzahnungen miteinander in Eingriff gebracht. Die beiden Verstellglieder werden dazu normal zur axialen Verschieberichtung mittels einer zwischen den beiden Verstellglieder wirkenden Druckfeder aufeinander zu bewegt.

Der Erfindung liegt die Aufgabe zugrunde, eine gattungsgemäße Einstellvorrichtung so weiterzubilden, dass sie günstig herzustellen sowie einfach und sicher zu bedienen ist, und dennoch in der Lage ist, große Kräfte zu übertragen.

Zur Lösung der Aufgabe wird vorgeschlagen, dass bei einer gattungsgemäßen Einstellvorrichtung jedes Verstellglied mindestens eine Führungsnase und mindestens zwei parallel zueinander angeordnete, in Verschieberichtung ausgerichtete Führungsnuten aufweist, dass die Führungsnase des einen Verstellgliedes in die erste Führungsnut des zweiten Verstellgliedes und die Führungsnase des zweiten Verstellgliedes in die erste Führungsnut des ersten Verstellgliedes einzugreifen vermag, dass die beiden Verstellglieder normal zur axialen Verschieberichtung aufeinander zu bewegbar sind, dass dabei die jeweilige Führungsnase von der jeweiligen ersten Führungsnut in eine zweite Führungsnut überführbar ist, wobei die Verriegelungsmittel des ersten Verstellgliedes und des zweiten Verstellgliedes beim aufeinander zu Bewegen der Verstellglieder in eine verrastende Wirkstellung bringbar sind, und dass bei in den jeweils zweiten Führungsnuten befindlichen Führungsnasen die Einstellvorrichtung sowohl in axialer Richtung als auch normal dazu arretiert ist.

Die jeweiligen Verstellglieder sind einfach aufgebaut und bedürfen z. B. keiner aufwendig zu entformender Innenhinterschneidungen, auch bedarf es keiner einstückig mit einem der Verstellglieder verbundenen Betätigungsmittel, da die Verstellglieder selbst die Betätigungsmittel darstellen..

Durch manuelles, werkzeugloses Zusammendrücken, d. h. aufeinander zudrücken der beiden Verstellglieder wird eine einfache Arretierung gewährleistet, bei der auch alle möglichen Verriegelungsmittel gleichzeitig miteinander verrasten, wohingegen nach dem Stand der Technik mehrere Betätigungsmittel betätigt werden müssen oder mittels eines Werkzeuges eine Verriegelung herbeigeführt werden muss, um eine möglichst optimale Arretierung zu erreichen. Die Bedienung der vorliegenden Einstellvorrichtung ist damit erheblich vereinfacht.

Vorteilhaft ist, dass die jeweilige Führungsnase federelastisch aus dem Nutgrund der zugeordneten Führungsnut heraus über die Nutwandung hinweg in eine weitere Führungsnut führbar ist.

Damit kann die Führungsnase aus dem Nutgrund der ersten Führungsnut herausgehoben und in die zweite überführt werden, wo sie federeleastisch wieder bis auf den Nutgrund zurückschnellt.

Nachahmenswert ist, dass jede Führungsnut am, dem jeweils mitwirkenden Verstellglied zugewandten Ende eine Begrenzung aufweist, und dass der jeweils ersten Führungsnut an der Außenseite der Begrenzung eine Auflauframpe für die Führungsnase "zugeordnet ist.

Durch die Auflauframpe lassen sich bei noch nicht montierten Führungselementen die beiden Führungselemente leicht zusammenfügen. Dabei wird durch die Auflauframpe die Führungsnase des einen Verstellgliedes automatisch in die erste Führungsnut des zweiten Verstellgliedes und umgekehrt eingeführt. Durch die Begrenzung wird die Führungsnase in der Führungsnut gegen unbeabsichtigte Demontage gesichert.

Es hat sich bewährt, dass jede erste Führungsnut an ihrer zur jeweiligen zweiten Führungsnut jedes Verstellgliedes weisenden Nutwandung eine rampenförmige Abschrägung aufweist und dass die jeweils in einer ersten Führungsnut befindliche Führungsnase über die Abschrägung in die jeweils zweite Führungsnut überführbar ist.

Damit lässt sich durch einfaches Zusammendrücken quer zur Seelenachse der beiden Verstellglieder die jeweiligen Führungsnasen der Verstellglieder aus der jeweils ersten Führungsnut in die jeweils zweite Führungsnut problemlos überführen. Unter Auffederung der Führungsnase und Gleiten über die rampenförmige Abschrägung werden keine großen Kräfte für das aufeinander zu Bewegen der Verstellglieder benötigt. Das von einem hörbaren Klackgeräusch und als Ruck spürbare Einrasten beider Führungsnasen in den jeweiligen zweiten Führungsnuten bestätigt dem Benutzer akustisch und haptisch die vollständige Verriegelung.

Der Übergang von der jeweils zweiten Führungsnut zur jeweils ersten Führungsnut weist keine Abschrägung auf, so dass die Führungsnasen sicher in der jeweils zweiten Führungsnut verbleiben. Ein Herausbewegen der Führungsnasen aus der jeweiligen zweiten Führungsnut ist nur unter Einsatz von geeignetem Werkzeug möglich.

Es empfiehlt sich, dass jedes Verstellglied eine Aufnahme für den Mantel oder dergleichen des Bowdenzuges und mit der Aufnahme verbunden einen Teil einer Führung für die Seele des Bowdenzuges aufweist, und dass am freien Ende der Führung für die Seele eine Halterungen für die Aufnahme eines Endes der Druckfeder vorgesehen ist.

Durch diese Halterungen wird die Druckfeder beim Zusammenbauen der Einstellvorrichtung optimal geführt, so dass dadurch die Montage vereinfacht ist.

Bemerkenswert ist, dass jedes Verstellglied mindestens zwei Verriegelungsmittel aufweist und dass das erste Verriegelungsmittel des ersten Verstellgliedes mit dem zweiten Verriegelungsmittel des zweiten Verstellgliedes sowie das zweite Verriegelungsmittel des ersten Verstellgliedes mit dem ersten Verriegelungsmittel des zweiten Verstellgliedes in Wirkverbindung bringbar sind.

Durch das Vorsehen zweier paariger Verriegelungsmittel kann die Einstellvorrichtung große Verriegelungskräfte aufnehmen.

Es hat sich bewährt, dass es sich bei den Verriegelungsmitteln um Verzahnungen, vorzugsweise sägezahnförmige Verzahnungen handelt.

Zweckmäßig ist, dass jedes Verstellglied eine Führungsaufnahme und einen Führungsstift aufweist, wobei der Führungsstift des ersten Verstellgliedes mit der Führungsaufnahme des zweiten Verstellgliedes und der Führungsstift des zweiten Verstellgliedes mit der Führungsaufnahme des ersten Verstellgliedes zusammenwirken und dass die Führungsaufnahme die Bewegung der Verstellglieder aufeinander zu auszugleichen vermögen.

Durch die Führungsstifte und Führungsaufnahmen sind zusätzlich zu den in den Führungsnuten geführten Führungsnasen weitere Führungen vorgesehen, die zusätzlich verhindern, dass sich die Einstellvorrichtung verkanten kann.

Ein besonderer Vorzug ergibt sich dadurch, dass sowohl die Führungen für die Seele der beiden zusammenwirkenden Verstellglieder als auch die Aufnahmen für die Enden der Druckfeder im arretierten Zustand fluchten.

Dadurch ist gewährleistet, dass bei arretierter Einstellvorrichtung die Seele nicht an Bauteilen der Einstellvorrichtung reibt, so dass die Einstellvorrichtung nicht verschleißen kann und Kräfte optimal übertragen werden können.

Nachahmenswert ist, dass die beiden Verstellglieder einer Einstellvorrichtung spiegelsymmetrisch aufgebaut sind.

Die Erfindung wird anhand von Zeichnungen näher erläutert. Dabei zeigen
- Figur 1: die erfindungsgemäße Einstellvorrichtung in nicht arretierter Stellung,
- Figur 2: perspektivisch dargestellt ein erstes Verstellglied der erfindungsgemäßen Einstellvorrichtung,
- Figur 3: das ebenfalls perspektivisch dargestellte, spiegelbildlich ausgestaltete zweite Verstellglied einer Einstellvorrichtung und

- Figur 4: die erfindungsgemäße Einstellvorrichtung in verrastetem Zustand.

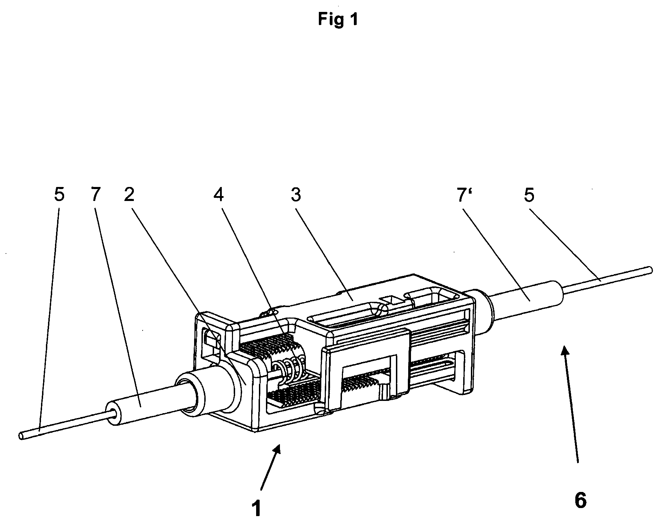

Figur 1 zeigt eine erfindungsgemäße Einstellvorrichtung 1, bestehend aus einem ersten Verstellglied 2 und einem zweiten Verstellglied 3, die über eine Druckfeder 4 gegeneinander in axialer Richtung vorgespannt sind. Die Einstellvorrichtung 1 nimmt die Seele 5 eines Bowdenzuges 6 auf, wobei der Mantel 7, 7' zweigeteilt die Einstellvorrichtung 1 zwischen sich aufnimmt. Es besteht aber auch die Möglichkeit, nur an einem Ende der Einstellvorrichtung 1 einen Mantel und am anderen Ende gleich die Betätigungsvorrichtung oder aber die zu betätigende Vorrichtung anzuordnen.

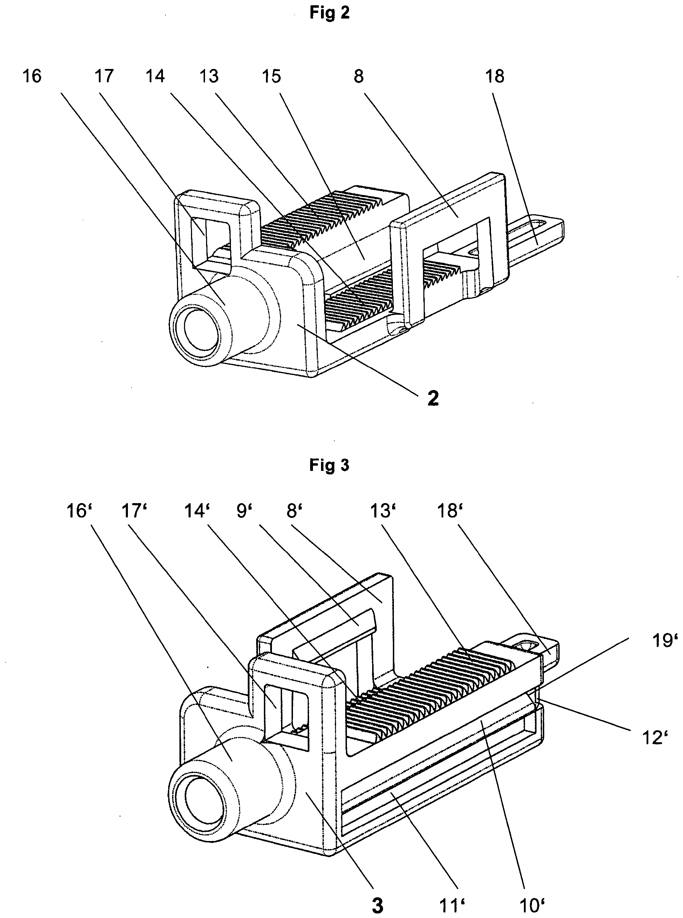

Figur 2 zeigt das erste Verstellglied 2 und Figur 3 das zweite Verstellglied 3 der erfindungsgemäßen Einstellvorrichtung 1. Dabei ist das erste Verstellglied 2 und das zweite Verstellglied 3 spiegelbildlich aufgebaut, so dass die in Figur 3 zu erkennende Vorderseite sich in Figur 2 auf der nicht dargestellten Rückseite widerspiegelt.

Den Figuren ist eine seitliche Führungseinrichtung 8, 8' zu entnehmen, welche die Führungsnase 9, 9' haltert. Die Führungsnase 9, 9' vermag in die erste Führungsnut 10', 10 einzugreifen, welche über der zweiten Führungsnut 11', 11 angeordnet ist. Beide Führungsnuten 10, 10' und 11, 11' weisen am, dem jeweils mitwirkenden Verstellglied 2, 3 zugewandte Ende Begrenzungen auf, wobei die Begrenzungen zur ersten Führungsnut eine Auflauframpe 12, 12' besitzt, über welche die Führungsnase 9, 9' bei der Montage der Einstellvorrichtung 1 leicht durch axiale Verschiebung in die erste Führungsnut 10', 10 gelangen kann. Beide Verstellglieder 2, 3 weisen Verriegelungsmittel 13, 13'; 14, 14' auf, die hier als sägezahnförmige Verzahnung ausgebildet sind. Weiterhin ist in Figur 2 eine Aussparung 15 für die nicht dargestellte Druckfeder 4 zu erkennen.

Beide Verstellglieder 2, 3 weisen Aufnahmen 16, 16' für den Mantel 7, 7' eines Bowdenzuges 6 auf. Weiterhin sind Führungsaufnahmen 17, 17' zu erkennen, die zur gegenseitigen Aufnahme der Führungsstifte 18', 18 dienen. Bei zusammengebauter Einstellvorrichtung 2, 3 dienen die in den Führungsaufnahmen 17, 17' aufgenommenen Führungsstifte 18', 18 gegen Verkantung der Einstellvorrichtung 1.

Die erste Führungsnut 10, 10' geht zur zweiten Führungsnut 11, 11' über eine rampenförmige Abschrägung 19, 19' über.

In Figur 1 ist die Einstellvorrichtung 1 in Vorverrastungsstellung gezeigt. Hier lassen sich das erste Verstellglied 2 und das zweite Verstellglied 3 axial gegeneinander Verschieben. Dabei ist die Führungsnase 9, 9' in der ersten Führungsnut 10', 10 leichtgängig hin und her verschiebbar.

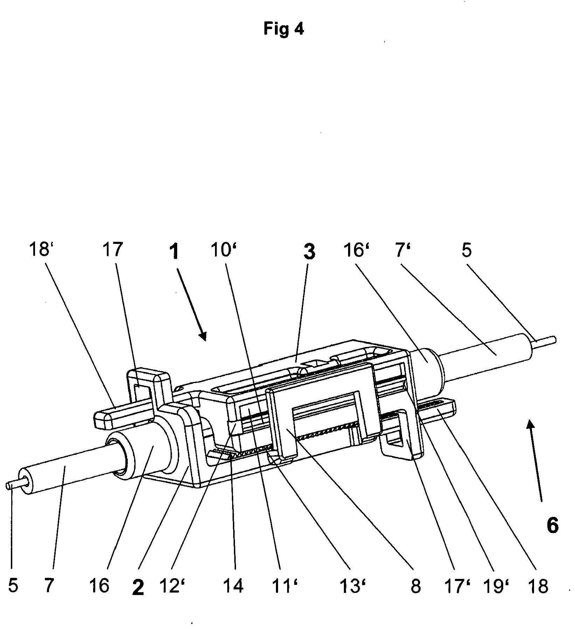

Figur 4 zeigt nunmehr die Einstellvorrichtung 1 in verrasteter Darstellung. Durch ein Aufeinanderzudrücken bzw. Zusammendrücken des ersten Verstellgliedes 2 und des zweiten Verstellgliedes 3 wurde die Führungsnase 9, 9' aus der ersten Führungsnut 10', 10 über die rampenförmige Abschrägung 19', 19 in die zweite Führungsnut 11', 11 verschoben. Dabei ist die Führungseinrichtung 8, 8' aufgedehnt worden und hat nachdem die Führungsnase 9, 9' die zweite Führungsnut 11', 11 erreicht hat, die Führungsnase 9, 9' in diese federelastisch hinein verschoben. Gleichzeitig sind die Verriegelungsmittel 13, 14 und 13', 14' in Wirkstellung gelangt. Damit ist keine axiale Verschiebung der Verstellglieder 2, 3 gegeneinander mehr möglich. Eine Bewegung normal zur axialen Richtung wird durch die feste Verbindung der Führungsnase 9, 9' in der zweiten Führungsnut 11', 11 verhindert.

### Bezugszeichenübersicht

- 1: Einstellvorrichtung
- 2: erstes Verstellglied
- 3: zweites Verstellglied
- 4: Druckfeder
- 5: Seele
- 6: Bowdenzug
- 7: Mantel
- 8: Führungseinrichtung
- 9: Führungsnase
- 10: erste Führungsnut
- 11: zweite Führungsnut
- 12: Auflauframpe
- 13: erste Verriegelungsmittel
- 14: zweite Verriegelungsmittel
- 15: Aussparung
- 16: Aufnahme
- 17: Führungsaufnahme
- 18: Führungsstift
- 19: Rampenförmig Abschrägung

## Patentansprüche

1. Einstellvorrichtung (1) zur Längenanpassung der Funktions- oder auch freie Seillänge genannten Längendifferenz zwischen Seele (5) und Mantel (7) eines Bowdenzuges (6) mit zwei axial zueinander verschiebbaren, über eine Druckfeder (4) gegeneinander vorgespannten, miteinander über Verriegelungsmittel (13, 14) verrastbaren, die Seele (5) gemeinsam aufnehmenden, zumindest mit einem Ende des Mantels (7) zusammenwirkenden Verstellgliedern (2, 3), **dadurch gekennzeichnet,**
**dass** jedes Verstellglied (2, 3) mindestens eine Führungsnase (9, 9') und mindestens zwei parallel zueinander angeordnete, in Verschieberichtung ausgerichtete Führungsnuten (10, 11; 10', 11') aufweist, dass die Führungsnase (9) des einen Verstellgliedes (2) in die erste Führungsnut (10') des zweiten Verstellgliedes (3) und die Führungsnase (9') des zweiten Verstellgliedes (3) in die erste Führungsnut (10) des ersten Verstellgliedes (2) einzugreifen vermag, dass die beiden Verstellglieder (2, 3) normal zur axialen Verschieberichtung aufeinander zu bewegbar sind, dass dabei die jeweilige Führungsnase (9, 9') von der jeweiligen ersten Führungsnut (10, 10') in eine jeweilige zweite Führungsnut (11, 11') überführbar ist, wobei die Verriegelungsmittel (13, 14:13', 14') des ersten Verstellgliedes (2) und des zweiten Verstellgliedes (3) beim aufeinander zu Bewegen der Verstellglieder (2, 3) in eine verrastende Wirkstellung bringbar sind, und dass bei in den jeweils zweiten Führungsnuten (11, 11') befindlichen Führungsnasen (9', 9) die Einstellvorrichtung (1) sowohl in axialer Richtung als auch normal dazu arretiert ist.

2. Einstellvorrichtung nach Anspruch 1,
**dadurch gekennzeichnet,**
**dass** die jeweilige Führungsnase (9, 9') federelastisch aus dem Nutgrund der zugeordneten Führungsnut (10, 11) heraus über die Nutwandung hinweg in eine weitere Führungsnut führbar ist.

3. Einstellvorrichtung nach Anspruch 1 oder 2,
**dadurch gekennzeichnet,**
**dass** jede Führungsnut (10, 11) am, dem jeweils mitwirkenden Verstellglied zugewandte Ende eine Begrenzung aufweist, und dass der jeweils ersten Führungsnut (10) an der Außenseite der Begrenzung eine Auflauframpe (12) für die Führungsnase (9) zugeordnet ist.

4. Einstellvorrichtung nach einem der Ansprüche 1 bis 3,
**dadurch gekennzeichnet,**
**dass** jede erste Führungsnut (10) an ihrer zu jeweiligen zweiten Führungsnut (11) jedes Verstellgliedes (2, 3) weisenden Nutwandung eine rampenförmige Abschrägung (19) aufweist, und dass die jeweils in einer ersten Führungsnut (10) befindliche Führungsnase (9) über die rampenförmige Abschrägung (19) in die jeweilige zweite Führungsnut (11) überführbar ist.

5. Einstellvorrichtung nach einem der Ansprüche 1 bis 4,
**dadurch gekennzeichnet,**
**dass** jedes Verstellglied (2, 3) eine Aufnahme (16) für den Mantel (7) oder dergleichen des Bowdenzuges (6) und mit der Aufnahme verbunden einen Teil einer Führung für die Seele (5) des Bowdenzugs (6) aufweist, und dass am freien Ende der Führung eine Halterung für die Aufnahme eines Endes der Druckfeder (4) vorgesehen ist.

6. Einstellvorrichtung nach einem der Ansprüche 1 bis 5,
**dadurch gekennzeichnet,**
**dass** jedes Verstellglied (2, 3) mindestens zwei Verriegelungsmittel (13, 14) aufweist und dass das erste Verriegelungsmittel (13) des ersten Verstellgliedes (2) mit dem zweiten Verriegelungsmittel (14') des zweiten Verstellgliedes (3) sowie das zweite Verriegelungsmittel (14) des ersten Verstellgliedes (2) mit dem ersten Verriegelungsmittel (13') des zweiten Verstellgliedes (3) in Wirkverbindung bringbar sind.

7. Einstellvorrichtung nach einem der Ansprüche 1 bis 6,
**dadurch gekennzeichnet,**
**dass** es sich bei den Verriegelungsmitteln (13, 14) um Verzahnungen, vorzugsweise sägezahnförmige Verzahnungen handelt.

8. Einstellvorrichtung nach einem der Ansprüche 1 bis 7,
**dadurch gekennzeichnet,**
**dass** jedes Verstellglied (1, 2) eine Führungsaufnahme (17, 17') und einen Führungsstift (18, 18') aufweist, wobei der Führungsstift (18) des ersten Verstellgliedes (2) mit der Führungsaufnahme (17') des zweiten Verstellgliedes (3) und der Führungsstift (18') des zweiten Verstellgliedes (3) mit der Führungsaufnahme (17) des ersten Verstellgliedes (2) zusammenwirken und dass die Führungsaufnahmen (17, 17') die Bewegung der Verstellglieder (2, 3) aufeinander zu auszugleichen vermögen.

9. Einstellvorrichtung nach einem der Ansprüche 1 bis 8,
**dadurch gekennzeichnet,**
**dass** sowohl die Führungen für die Seele der beiden zusammenwirkenden Verstellglieder (2, 3) als auch die Aufnahmen für die Enden der Druckfeder (4) im arretierten Zustand der Einstellvorrichtung (1) fluchten.

10. Einstellvorrichtung nach einem der Ansprüche 1 bis 9,
**dadurch gekennzeichnet,**
**dass** die beiden Verstellglieder (2, 3) einer Einstellvorrichtung (1) spiegelbildlich aufgebaut sind.

## Claims

1. An adjusting device (1) for length adjustment of the length difference, referred to as functional or free cable length, between the core (5) and the casing (7) of a Bowden cable (6), having two adjusting members (2, 3) which are axially displaceable relative to each other, are preloaded against each other via a compression spring (4), can be latched to each other via locking means (13, 14), together accommodate the core (5), and interact at least with one end of the casing (7),
**characterised in that**
each adjusting member (2, 3) has at least one guide nose (9, 9') and at least two guide grooves (10, 11; 10', 11') which are arranged parallel to each other and are oriented in the displacement direction; the guide nose (9) of one adjusting member (2) can engage in the first guide groove (10') of the second adjusting member (3), and the guide nose (9') of the second adjusting member (3) can engage in the first guide groove (10) of the first adjusting member (2); the two adjusting members (2, 3) are movable towards each other normally to the axial displacement direction; the respective guide nose (9, 9') can be transferred from the respective first guide groove (10, 10') into a respective second guide groove (11, 11'), wherein the locking means (13, 14; 13', 14') of the first adjusting member (2) and of the second adjusting member (3) can be brought into a latching operative position when the adjusting members (2, 3) move towards each other; and, when the guide noses (9', 9) are in the respective second guide grooves (11, 11'), the adjustment device (1) is fixed both in the axial direction and normally thereto.

2. The adjustment device according to Claim 1, **characterised in that**
the respective guide nose (9, 9') can be guided in a spring-elastic manner out of the groove bottom of the associated guide groove (10, 11), over the groove wall, into a further guide groove.

3. The adjustment device according to Claim 1 or 2,
**characterised in that**
each guide groove (10, 11) has a limit at the end facing the in each case interacting adjusting member, and the respective first guide groove (10) is assigned a run-on ramp (12) for the guide nose (9) on the outside of the limit.

4. The adjustment device according to any one of Claims 1 to 3,
**characterised in that**
each first guide groove (10) has a ramp-like bevel (19) on its groove wall which faces the respective second guide groove (11) of each adjusting member (2, 3), and the guide nose (9) situated in each case in a first guide groove (10) can be transferred via the ramp-like bevel (19) into the respective second guide groove (11).

5. The adjustment device according to any one of Claims 1 to 4,
**characterised in that**
each adjusting member (2, 3) has a receptacle (16) for the casing (7) or the like of the Bowden cable (6) and, connected to the receptacle, a part of a guide for the core (5) of the Bowden cable (6), and a holder for holding one end of the compression spring (4) is provided at the free end of the guide.

6. The adjustment device according to any one of Claims 1 to 5,
**characterised in that**
each adjusting member (2, 3) has at least two locking means (13, 14), and the first locking means (13) of the first adjusting member (2) can be brought into operative connection with the second locking means (14') of the second adjusting member (3), and the second locking means (14) of the first adjusting member (2) can be brought into operative connection with the first locking means (13') of the second adjusting member (3).

7. The adjustment device according to any one of Claims 1 to 6,
**characterised in that**
the locking means (13, 14) are teeth, preferably sawtooth-like teeth.

8. The adjustment device according to any one of Claims 1 to 7,
**characterised in that**
each adjusting member (1, 2) has a guide receptacle (17, 17') and a guide pin (18, 18'), wherein the guide pin (18) of the first adjusting member (2) interacts with the guide receptacle (17') of the second adjusting member (3), and the guide pin (18') of the second adjusting member (3) interacts with the guide receptacle (17) of the first adjusting member (2), and the guide receptacles (17, 17') can equalise the movement of the adjusting members (2, 3) towards each other.

9. The adjustment device according to any one of Claims 1 to 8,
**characterised in that**
the guides for the core of the two interacting adjusting members (2, 3) and the receptacles for the ends of the compression spring (4) align when the adjustment device (1) is in the fixed state.

10. The adjustment device according to any one of Claims 1 to 9,
**characterised in that**
the two adjusting members (2, 3) of an adjustment device (1) are constructed in mirror-image.

## Revendications

1. Dispositif de réglage (1), destiné à ajuster la différence de longueur appelée longueur fonctionnelle, mais également longueur libre de câble entre l'âme (5) et l'enveloppe (7) d'un câble Bowden (6), pourvu de deux organes de réglage (2, 3), déplaçables l'un par rapport à l'autre en direction axiale, précontraints l'un contre l'autre par l'intermédiaire d'un ressort de pression (4), enclenchables l'un avec l'autre par l'intermédiaire de moyens de verrouillage (13, 14), recevant conjointement l'âme (5), coopérant avec au moins une extrémité de l'enveloppe (7), **caractérisé en ce que** chaque organe de réglage (2, 3) comporte au moins un ergot de guidage (9, 9') et au moins deux rainures de guidage (10, 11 : 10', 11') placées à la parallèle l'une de l'autre, orientées dans la direction de translation, **en ce que** l'ergot de guidage (9) de l'un des organes de réglage (2) est susceptible de s'engager dans la première rainure de guidage (10') du deuxième organe de réglage (3) et l'ergot de guidage (9') du deuxième organe de réglage (3) est susceptible de s'engager dans la première rainure de guidage (10) du premier organe de réglage (2), **en ce que** les deux organes de réglage (2, 3) sont déplaçables l'un vers l'autre à la normale par rapport à la direction de translation axiale, **en ce qu'**à cet effet, l'ergot de guidage (9, 9') respectif est susceptible d'être transféré par la première rainure de guidage (10, 10') respective dans une deuxième rainure de guidage (11, 11') respective, lors du déplacement l'un vers l'autre des organes de réglage (2, 3), les moyens de verrouillage (13, 14 ; 13', 14') du premier organe de réglage (2) et du deuxième organe de réglage (3) étant susceptibles d'être amenés dans une position active d'enclenchement, et **en ce que** lorsque les ergots de guidage (9', 9) se trouvent dans les deuxièmes rainures de guidage (11, 11') respectives, le dispositif de réglage (1) est bloqué aussi bien en direction axiale qu'à la normale de ces dernières.

2. Dispositif de réglage selon la revendication 1, **caractérisé en ce que** l'ergot de guidage (9, 9') respectif est susceptible d'être guidé avec une élasticité de ressort hors du fond de rainure de la rainure de guidage (10, 11) associée, par l'intermédiaire de la paroi de ressort dans une autre rainure de guidage.

3. Dispositif de réglage selon la revendication 1 ou 2, **caractérisé en ce que** sur l'extrémité qui fait face à l'organe de réglage respectif coopérant, chaque rainure de guidage (10, 11) comporte une délimitation et **en ce qu'**à la première rainure de guidage (10) respective est associée sur le côté extérieur de la délimitation une rampe d'accostage (12) pour l'ergot de guidage (9).

4. Dispositif de réglage selon l'une quelconque des revendications 1 à 3, **caractérisé en ce que** sur sa paroi de rainure dirigée vers la deuxième rainure de guidage (11) respective de chaque organe de réglage (2, 3), chaque première rainure de guidage (10) comporte un biseau (19) en forme de rampe et **en ce que** l'ergot de guidage (9) se trouvant respectivement dans une première rainure de guidage (10) est susceptible d'être amené par l'intermédiaire du biseau (19) en forme de rampe dans la deuxième rainure de guidage (11) respective.

5. Dispositif de réglage selon l'une quelconque des revendications 1 à 4, **caractérisé en ce que** chaque organe de réglage (2, 3) comporte un logement (16) pour l'enveloppe (7) ou similaire du câble Bowden (6) et reliée avec le logement, une partie d'un guidage de l'âme (5) du câble Bowden (6) et **en ce que** sur l'extrémité libre du guidage est prévu un support pour le logement d'une extrémité du ressort de pression (4) .

6. Dispositif de réglage selon l'une quelconque des revendications 1 à 5, **caractérisé en ce que** chaque organe de réglage (2, 3) comporte au moins deux moyens de verrouillage (13, 14) et **en ce que** le premier moyen de verrouillage (13) du premier organe de réglage (2) est susceptible d'être amené en liaison active avec le deuxième moyen de verrouillage (14') du deuxième organe de réglage (3) et le deuxième moyen de verrouillage (14) du premier organe de réglage (2) est susceptible d'être amené en liaison active avec le premier moyen de verrouillage (13') du deuxième organe de réglage (3).

7. Dispositif de réglage selon l'une quelconque des revendications 1 à 6, **caractérisé en ce que** les moyens de verrouillage (13, 14) sont des dentures, de préférence des dentures en forme de dents de scie.

8. Dispositif de réglage selon l'une quelconque des revendications 1 à 7, **caractérisé en ce que** chaque organe de réglage (1, 2) comporte un logement de guidage (17, 17') et une goupille de guidage (18, 18'), la goupille de guidage (18) du premier organe de réglage (2) coopérant avec le logement de guidage (17') du deuxième organe de réglage (3) et la goupille de guidage (18') du deuxième organe de réglage (3) coopérant avec le logement de guidage (17) du premier organe de réglage (2) et **en ce que** les logements de guidage (17, 17') sont susceptibles de compenser le déplacement l'un vers l'autre des organes de réglage (2, 3) .

9. Dispositif de réglage selon l'une quelconque des revendications 1 à 8, **caractérisé en ce qu'**en position bloquée du dispositif de réglage (1), aussi bien les guidages de l'âme des deux organes de réglage (2, 3) coopérants qu'également les logements des extrémités du ressort de pression (4) sont alignés.

10. Dispositif de réglage selon l'une quelconque des revendications 1 à 9, **caractérisé en ce que** les deux organes de réglage (2, 3) d'un dispositif de réglage (1) sont construits en symétrie spéculaire.
